# DEMANDE DE BREVET EUROPEEN

(11) **EP 2 724 945 A2**
(43) Date de publication de la demande: **30.04.2014**
(21) Numéro de dépôt: 13189116.0
(22) Date de dépôt: 17.10.2013
(51) Int. Cl.: B64G 1/22, F16C 11/12, E05D 1/02, B64G 1/44, B25J 17/02

(54) **Système de motorisation pour articulation à pistes de roulement flexibles**

(30) Priorité: 26.10.2012 FR 1202861
(71) Demandeur: Thales, 92200 Neuilly Sur Seine (FR)
(72) Inventeur: Baudasse, Yannick, 06150 Cannes-La-Bocca (FR); Vezain, Stéphane, 06150 Cannes-La-Bocca (FR); Stanek, Didier, 06150 Cannes-La-Bocca (FR)
(74) Mandataire: Nguyen, Dominique

(57) **Abrégé**

La présente invention a pour objet un dispositif de motorisation comprenant deux cylindres d'enroulement (1a) sensiblement parallèles, au moins des moyens d'enroulement formant élément de liaison de forme longitudinale, les moyens d'enroulement étant aptes à maintenir une distance prédéterminée entre les cylindres d'enroulement (1a) et étant enroulés autour des cylindres d'enroulement (1 a), et au moins deux pistes flexibles (2a), une piste flexible (2a) étant fixée sur chaque cylindre d'enroulement (1a), les pistes flexibles (2a) étant disposées en vis-à-vis et présentant un point de contact, un effort de précontrainte s'appliquant audit point de contact des pistes flexibles (2a) sous l'effet des moyens d'enroulement, caractérisé en ce que le dispositif de motorisation comprend des moyens élastiques (30) disposés entre chaque cylindre d'enroulement (1a) et la piste flexible correspondante (2a), les moyens élastiques (30) étant configurés de manière à exercer un effort radial de compression sur chaque piste flexible (2a), normal à la surface de la piste flexible (2a) au moins au niveau dudit point de contact.

## Description

La présente invention concerne les systèmes de motorisation d'éléments. Elle s'applique notamment au domaine des mécanismes de déploiement d'appendices spatiaux, tels que des antennes ou des générateurs solaires par exemple.

Dans les systèmes de motorisation précités, des éléments, par exemple des ferrures, sont typiquement mis en mouvement les uns par rapport aux autres autour d'articulations. Ces systèmes comprennent ainsi des lignes d'articulations utilisant généralement des composants de motorisation du type ressorts de torsion, ressorts spiraux ou joints de Carpentier, permettant de lutter contre les couples résistants et de garantir les marges nécessaires en termes de couples générés en vue d'assurer le déploiement complet des appendices.

Dans ce contexte, les composants de motorisation connus présentent un couple de motorisation évolutif ou variable impliquant une sur-motorisation qui occasionne des chocs en fin de déploiement.

Ces chocs peuvent être importants et générer des dégâts sur les appendices spatiaux en fin de déploiement, ainsi que des couples parasites néfastes au pilotage de l'engin spatial. Pour pallier ce problème, les structures déployables peuvent être dimensionnées et renforcées de manière à pouvoir résister aux chocs de fin de course générés lors de leur déploiement, mais cette solution n'est pas satisfaisante et entraîne notamment un poids accru pour la structure complète.

Certains développements ont mené à la mise au point de mécanismes de déploiement à couple résistif quasi-nul. De tels mécanismes, tels que la ligne d'articulations décrite dans la demande de brevet FR 2635077, présentent l'avantage de ne nécessiter que peu de puissance de motorisation et engendrent des chocs de fin de course minimisés. D'autres mécanismes sont le fruit d'améliorations apportées au mécanisme précédent, en termes de masse et de volume notamment. Un tel mécanisme de déploiement est divulgué dans la demande de brevet FR 0605653.

Les mécanismes connus, tels que ceux décrits dans les demandes de brevets FR 2635077 et FR 0605653 précitées, ont une capacité angulaire de déploiement limitée à 180°. Par ailleurs, leur cinématique d'ensemble, du fait de leur structure, engendre des couples de motorisation très irréguliers. Enfin, la vitesse de déploiement des mécanismes de déploiement connus, comme déjà évoqué, entraîne une restitution d'énergie en fin de course, donc un choc, car ladite vitesse de déploiement n'est pas régulée.

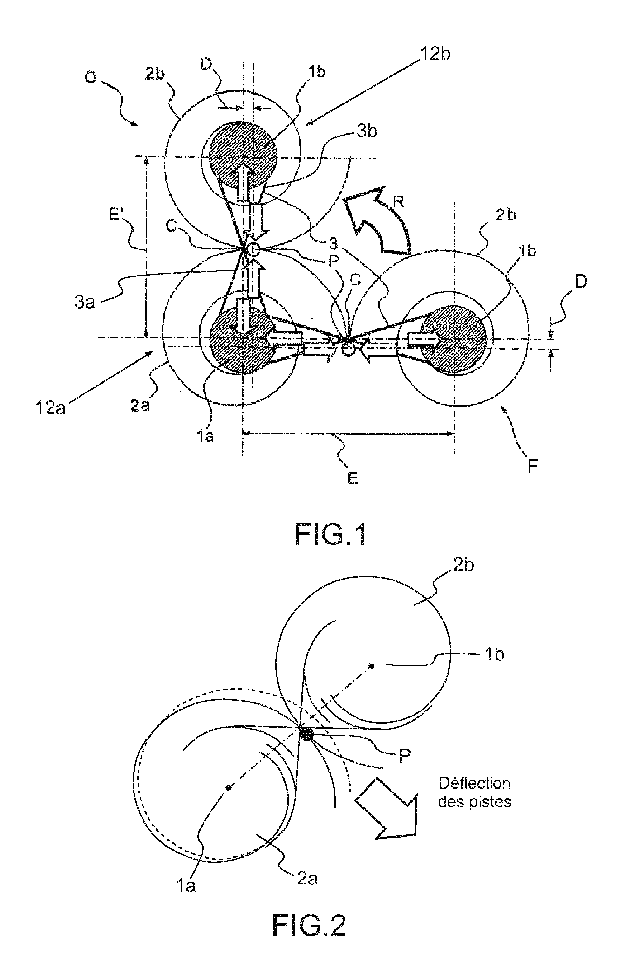

Pour corriger ces inconvénients, il a été proposé un dispositif de motorisation à couple contrôlé, décrit dans la demande de brevet publiée sous la référence FR 2968234. Un tel dispositif permet de présenter un couple résistant quasi-nul, et se fonde sur l'utilisation de pistes flexibles de roulement déjà existantes dans le système, pour réaliser la motorisation. Une forme spécifique est donnée aux pistes flexibles de manière à permettre un excentrement du point de contact entre les pistes flexibles par rapport au point de croisement de moyens d'enroulement tels que des lames souples enroulées ou bien des câbles, formant un élément de liaison entre deux cylindres d'enroulement sensiblement parallèles formant ferrures, auxquels sont reliés différents composants du système. De la sorte, un couple dépendant de la distance entre le point de contact et le point de croisement précités provoque la rotation des ferrures entre elles. Par « point de croisement » entre les moyens d'enroulement formant élément de liaison, il est entendu de manière plus large l'axe sensiblement parallèle aux axes longitudinaux ou axes de révolution des ferrures, passant tout à la fois au travers des deux moyens d'enroulement. Un exemple de dispositif de motorisation à couple contrôlé tel que décrit ci-dessus est décrit plus en détails ci-après en référence à la figure 1.

Dans le dispositif précité, étant donné qu'une forme spécifique est donnée aux pistes flexibles, cette forme spécifique s'apparentant à la forme d'un ressort d'Archimède ou ressort spiral, un problème peut se poser, lié à la déflection latérale des pistes sous la contrainte. La déflection latérale des pistes induit un problème de maîtrise du couple de motorisation du dispositif. Ce problème est illustré par la figure 2, décrite ci-après.

Un but de la présente invention est notamment de pallier les inconvénients précités. Ainsi, il est proposé par la présente invention un dispositif de motorisation comprenant au moins deux pistes flexibles de roulement, ces dernières étant associées à des moyens élastiques permettant une compression radiale des pistes flexibles, afin d'assurer qu'un effort normal à la surface de chaque piste flexible soit exercé au niveau du point de contact entre les pistes flexibles.

Un autre avantage de la présente invention est qu'un dispositif de motorisation selon l'un des modes de réalisation décrits offre un gain de volume substantiel par rapport aux dispositifs connus de l'état de la technique, ainsi qu'un gain substantiel en terme de masse.

Un autre avantage de la présente invention est qu'un dispositif de motorisation selon l'un des modes de réalisation décrits offre également un gain substantiel en termes de solidité et de robustesse.

Plus précisément, l'invention a pour objet un dispositif de motorisation comprenant deux cylindres d'enroulement sensiblement parallèles, au moins des moyens d'enroulement formant élément de liaison de forme longitudinale, les moyens d'enroulement étant aptes à maintenir une distance prédéterminée entre les cylindres d'enroulement et étant enroulés autour des cylindres d'enroulement, et au moins deux pistes flexibles, une piste flexible étant fixée sur chaque cylindre d'enroulement, les pistes flexibles étant disposées en vis-à-vis et présentant un point de contact, un effort de précontrainte s'appliquant audit point de contact des pistes flexibles sous l'effet des moyens d'enroulement, le dispositif de motorisation comprenant en outre des moyens élastiques disposés entre chaque cylindre d'enroulement et la piste flexible correspondante, les moyens élastiques étant configurés de manière à exercer un effort radial de compression sur chaque piste flexible, normal à la surface de la piste flexible au moins au niveau dudit point de contact.

Dans un mode de réalisation de l'invention, les pistes flexibles peuvent être cylindriques à section de forme spirale.

Dans un mode de réalisation de l'invention, les pistes flexibles peuvent être cylindriques à section circulaire.

Dans un mode de réalisation de l'invention, les moyens élastiques peuvent être formés par un treillis comprenant une pluralité de cellules ou un réseau tridimensionnel de poutres ou de plaques.

Dans un mode de réalisation de l'invention, les moyens élastiques associés à une piste flexible peuvent être formés par une pluralité de cellules disposées dans le volume compris entre la circonférence extérieure du cylindre d'enroulement et la circonférence intérieure de la piste flexible.

Dans un mode de réalisation de l'invention, les cellules peuvent avoir une longueur inférieure ou égale à la largeur de la bande de roulement des pistes flexibles.

Dans un mode de réalisation de l'invention, les cellules peuvent avoir une section polygonale.

Dans un mode de réalisation de l'invention, les cellules peuvent être configurées de manière à ce que les moyens élastiques constituent une structure auxétique.

Dans un mode de réalisation de l'invention, les moyens élastiques peuvent être disposés autour de l'intégralité de la circonférence extérieure des cylindres d'enroulement.

Dans un mode de réalisation de l'invention, les moyens élastiques peuvent être disposés autour d'une partie angulaire déterminée de la circonférence extérieure des cylindres d'enroulement.

La présente invention a également pour objet un système déployant pour satellite artificiel, comprenant au moins un premier appendice déployable et un second appendice déployable, **caractérisé en ce qu'il** comprend en outre un dispositif de motorisation selon l'un quelconque des modes de réalisation décrits, les appendices déployables étant fixés sur chaque ensemble formé par un cylindre d'enroulement et une piste flexible.

D'autres caractéristiques et avantages de l'invention apparaîtront à l'aide de la description qui suit faite en regard des dessins annexés qui représentent :
- la figure 1 : un schéma d'un système d'articulation à roulement à couple de motorisation, connu de l'état de la technique, dans des positions stockée et déployée ;
- la figure 2, un schéma illustrant de manière synoptique un phénomène de déflection des pistes flexibles ;
- la figure 3, une vue en perspective illustrant une partie d'un dispositif de motorisation selon un exemple de réalisation de l'invention.

La figure 1 présente un schéma illustrant un système de motorisation tel que décrit dans la demande de brevet FR 2968234 précitée. Un système de motorisation comprend des cylindres d'enroulement 1a, 1b sensiblement parallèles et maintenus en position par des moyens d'enroulement 3 tels que des lames souples, ou par tout autre élément adapté, comme par exemple des câbles. Les moyens d'enroulement 3 sont enroulés en forme de huit autour des cylindres d'enroulement 1a, 1b ; pris séparément, chaque moyen d'enroulement comprend notamment une portion linéaire 3a ou 3b, chaque portion linéaire 3a, 3b étant prolongée par une portion des moyens d'enroulement s'enroulant autour de chacun des cylindres d'enroulement 1a, 1b. Les moyens d'enroulement se croisent un point de croisement C.

Des pistes flexibles 2a, 2b, sont respectivement connectées à chacun des cylindres d'enroulement 1a, 1b à section circulaire. Les pistes flexibles 2a, 2b sont disposées en vis-à-vis et en contact l'une de l'autre. Un ensemble comprenant un cylindre d'enroulement 1a, 1b et une piste flexible 2a, 2b associée forme une ferrure 12a, 12b. Les moyens d'enroulement 3 induisent un effort de précontrainte s'appliquant au point de contact P entre les pistes flexibles 2a, 2b. Du fait de la géométrie à base circulaire des cylindres d'enroulement 1a, 1b et des pistes flexibles, le point de contact P entre les pistes flexibles 2a, 2b et le point de croisement C des moyens d'enroulement 3 sont alignés sur un plan orthogonal au plan passant par les deux axes de révolution des deux cylindres d'enroulement 1a, 1b, et parallèle et équidistant des axes de révolution des deux cylindres d'enroulement 1a, 1b. Des appendices, tels que des générateurs solaires, peuvent être fixés sur chaque ensemble cylindre d'enroulement / piste flexible 1a-2a / 1b-2b.

Les pistes flexibles 2a, 2b peuvent être constituées de pistes flexibles en forme de spirale. Le profil des pistes flexibles 2a, 2b peut également être formé par plusieurs portions de spirales, et/ou par plusieurs portions de profil circulaire. La forme spécifique de spirale permet d'excentrer le point de contact P inter-pistes flexibles 2a, 2b par rapport au point de croisement C des moyens d'enroulement 3. Le point de contact P et le point de croisement C ne se trouvent pas sur le même axe parallèle aux axes de révolution des cylindres d'enroulement 1a, 1b. Cet excentrement d'une distance D, du point de contact P par rapport au point de croisement C, entraîne l'excentrement de l'effort de précontrainte induit par les moyens d'enroulement 3 et s'appliquant au point de contact P. De ce fait, un couple R est produit entre le point de contact P et le point de croisement C induisant la rotation des ferrures 12a, 12b, comprenant les pistes flexibles 2a, 2b et les cylindres d'enroulement 1a, 1b. La rotation des ferrures 12a, 12b entre elles, du fait de leur forme de spirale, entraîne une variation de la déformation des pistes flexibles 2a, 2b et plus précisément de la flèche au point de contact, l'entraxe des cylindres d'enroulement 1a, 1b étant quant à lui constant, la longueur E de l'entraxe en position fermée F étant égale à la longueur E' en position ouverte O, du fait de la cylindricité à section circulaire des cylindres d'enroulement 1a, 1b.

Le couple R peut être ajusté au moyen des choix effectués sur la forme de la spirale et sur les caractéristiques physiques des pistes flexibles 2a, 2b, en particulier leur élasticité et leur rigidité. Pour augmenter le couple R exercé sur les pistes flexibles 2a, 2b, il est possible d'augmenter le déport du point de contact P par rapport au point de croisement C en réalisant une spirale avec un angle d'ouverture important, ou d'augmenter l'effort exercé au point de contact P en réalisant une piste flexible plus raide. Pour augmenter l'effort exercé au point de contact C, il est encore possible d'augmenter la flèche des pistes flexibles 2a, 2b.

Pour générer un couple R constant pendant la phase de déploiement, une forme de spirale d'Archimède peut être préférée.

Le couple R de motorisation peut également être adapté afin de compenser certains couples de frottement variables introduits par des éléments externes à l'articulation. Il peut s'agir typiquement des torons de câbles électriques acheminant l'électricité entres deux panneaux de générateur solaire. Il est ainsi possible d'obtenir une marge de motorisation quasi-constante tout au long du déploiement. Le besoin en motorisation peut alors être ajusté au strict nécessaire.
La figure 2 illustre de manière synoptique un phénomène de déflection des pistes flexibles, se produisant avec un système de motorisation tel que décrit précédemment en référence à la figure 1.
La figure 2 représente une section partielle d'un dispositif de motorisation comprenant notamment deux pistes flexibles 2a, 2b disposées autour de cylindres de roulement 1a, 1b. Lors d'un mouvement des cylindres de roulement 1a, 1b, par exemple lors d'un mouvement de rotation dextrogyre du premier cylindre de roulement 1a, associé à un mouvement de rotation sénestrogyre du second cylindre de roulement 1b ainsi que dans l'exemple non limitatif illustré par la figure, une déflexion latérale des pistes flexibles 2a, 2b se produit, entraînant un déplacement indésirable du point de contact P dans une direction tangentielle aux pistes flexibles 2a, 2b. Ainsi que cela est indiqué précédemment, le déplacement du point de contact P nuit à une bonne maîtrise du couple de motorisation du dispositif de motorisation.

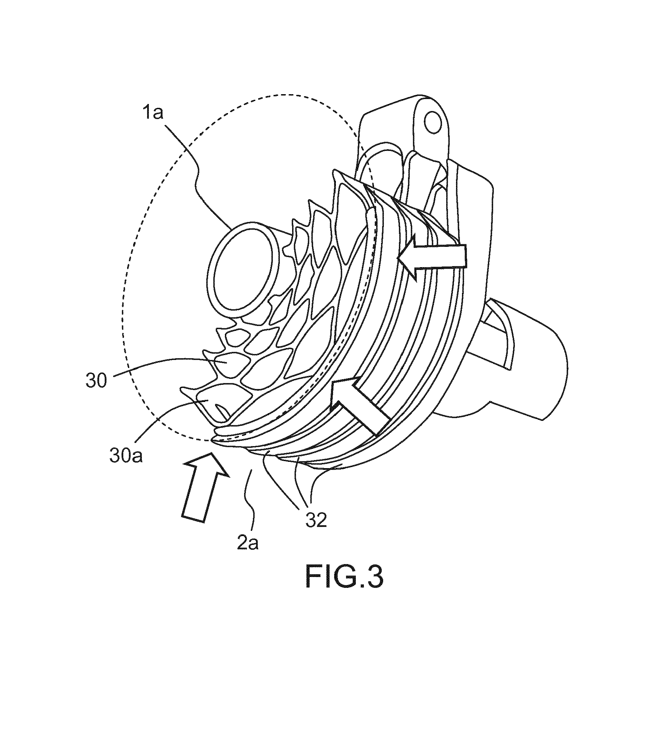

Par la présente invention, il est proposé que des pistes de forme globalement cylindrique, par exemple à section de forme spirale soient associées à des moyens élastiques permettant une compression radiale des pistes flexibles, afin d'assurer qu'un effort normal à la surface de chaque piste flexible soit exercé au niveau du point de contact entre les pistes flexibles. La section des pistes flexibles peut également être par exemple de forme circulaire. La figure 3 décrite ci-après présente un exemple non limitatif de mode de réalisation d'une piste flexible associée à des moyens élastiques.
La figure 3 présente une vue en perspective illustrant une partie d'un dispositif de motorisation selon un exemple de réalisation de l'invention.
La figure 3 illustre notamment un cylindre d'enroulement 1a autour duquel est disposé une piste flexible 2a.

Dans l'exemple illustré par la figure 3, la piste flexible 2a d'un dispositif de motorisation non représenté dans son intégralité, est globalement de forme spirale, et disposée autour d'un cylindre de roulement 1a. La piste flexible 2a peut par exemple être constituée d'une pluralité de bandes de roulement 32 parallèles entre elles.

Le dispositif de motorisation comprend de plus des moyens élastiques 30 disposés entre le cylindre de roulement 1a et la piste flexible 2a. Les moyens élastiques sont configurés de manière à produire un effet ressort, et de maintenir les pistes flexibles fermement en contact, en exerçant un effort radial de compression sur chaque piste flexible, normal à la surface de la piste flexible au moins au niveau du point de contact entre les pistes flexibles.

Les moyens élastiques peuvent être réalisés par des structures souples, telles que des treillis formés de cellules ou de réseaux tridimensionnels de poutres ou de plaques.

Dans l'exemple illustré par la figure 3, les moyens élastiques peuvent être formés par une pluralité de cellules 30a formant un treillis flexible. Les cellules 30a peuvent être globalement cylindriques selon une pluralité d'axes parallèles à l'axe de révolution du cylindre de roulement 1a. Dans l'exemple illustré par la figure, les cellules 30a s'étendent globalement sur une longueur inférieure ou égale à la largeur de la bande de roulement totale procurée par la piste flexible 2a, étant entendu qu'il ne s'agit pas là d'un exemple limitatif de la présente invention. Les cellules 30a peuvent avoir des sections de formes diverses. Dans l'exemple illustré par la figure 3, les cellules 30a ont des sections en forme d'hexagones irréguliers, dont les aires vont croissant en s'éloignant du cylindre de roulement 1a vers la piste flexible 2a. D'autres formes peuvent être envisagées, notamment d'autres polygones, des formes d'écailles, etc.

Avantageusement, les sections des cellules 30a peuvent présenter des formes telles que les moyens élastiques présentent une structure auxétique, c'est-à-dire à coefficient de Poisson négatif. Les cellules peuvent par exemple présenter des sections en forme de diabolo.

Une structure auxétique présente l'avantage de pouvoir se déformer sous l'effet d'un déplacement radial de la piste flexible en subissant très peu de contraintes tangentielles, en comparaison avec une structure traditionnelle. Cet avantage permet donc de minimiser la déflexion tangentielle du point de contact des pistes flexibles.

Un autre avantage d'une structure auxétique est lié au fait que celle-ci peut être utilisée pour dissiper de l'énergie et ainsi réguler la vitesse de rotation des ferrures. En effet, des cellules d'une structure auxétique peuvent par exemple être emplies d'un matériau amortissant, par exemple un matériau de type visco-élastique. Si l'on considère le volume de la cellule, celui-ci va varier dans de forte proportions lors d'une déformation en comparaison avec une structure traditionnelle, le matériau amortissant subira donc des différences de pression importantes et dissipera donc plus d'énergie ce qui génèrera de la régulation en vitesse de rotation.

Les moyens élastiques peuvent être disposées autour de toute la circonférence extérieure du cylindre de roulement 1a, dans l'espace compris entre le cylindre de roulement 1a et la circonférence intérieure de la piste flexible 2a. Dans un mode de réalisation avantageux, ainsi qu'illustré par la figure 3, les cellules 30a peuvent être disposées autour d'une partie angulaire seulement de la circonférence du cylindre de roulement 1a, une telle configuration présente un avantage supplémentaire en terme de gain de masse et de volume.

## Revendications

1. Dispositif de motorisation comprenant deux cylindres d'enroulement (1a,1b) sensiblement parallèles, au moins des moyens d'enroulement formant élément de liaison (3) de forme longitudinale, les moyens d'enroulement (3) étant aptes à maintenir une distance prédéterminée entre les cylindres d'enroulement (1a,1b) et étant enroulés autour des cylindres d'enroulement (1a,1b), et au moins deux pistes flexibles (2a,2b), une piste flexible (2a,2b) étant fixée sur chaque cylindre d'enroulement (1a,1b), les pistes flexibles (2a,2b) étant disposées en vis-à-vis et présentant un point de contact (P), un effort de précontrainte s'appliquant audit point de contact (P) des pistes flexibles (2a,2b) sous l'effet des moyens d'enroulement (3), **caractérisé en ce que** le dispositif de motorisation comprend des moyens élastiques (30) disposés entre chaque cylindre d'enroulement (1a, 1b) et la piste flexible correspondante (2a, 2b), les moyens élastiques (30) étant configurés de manière à exercer un effort radial de compression sur chaque piste flexible (2a, 2b), normal à la surface de la piste flexible (2a, 2b) au moins au niveau dudit point de contact (P).

2. Dispositif de motorisation suivant la revendication 1, **caractérisé en ce que** les pistes flexibles (2a, 2b) sont cylindriques à section de forme spirale.

3. Dispositif de motorisation suivant la revendication 1, **caractérisé en ce que** les pistes flexibles (2a, 2b) sont cylindriques à section circulaire.

4. Dispositif de motorisation suivant l'une quelconque des revendications précédentes, **caractérisé en ce que** les moyens élastiques (30) sont formés par un treillis comprenant une pluralité de cellules (30a) ou un réseau tridimensionnel de poutres ou de plaques.

5. Dispositif de motorisation suivant l'une quelconque des revendications 1 à 3, **caractérisé en ce que** les moyens élastiques (30) associés à une piste flexible (2a, 2b) sont formés par une pluralité de cellules (30a) disposées dans le volume compris entre la circonférence extérieure du cylindre d'enroulement (1a, 1b) et la circonférence intérieure de la piste flexible (2a, 2b).

6. Dispositif de motorisation suivant la revendication 5, **caractérisé en ce que** les cellules (30a) ont une longueur inférieure ou égale à la largeur de la bande de roulement des pistes flexibles (2a, 2b).

7. Dispositif de motorisation suivant l'une quelconque des revendications 5 à 6, **caractérisé en ce que** les cellules (30a) ont une section polygonale.

8. Dispositif de motorisation suivant l'une quelconque des revendications 5 à 6, **caractérisé en ce que** les cellules (30a) sont configurées de manière à ce que les moyens élastiques constituent une structure auxétique.

9. Dispositif de motorisation suivant l'une quelconque des revendications précédentes, **caractérisé en ce que** les moyens élastiques (30) sont disposés autour de l'intégralité de la circonférence extérieure des cylindres d'enroulement (1a, 1b).

10. Dispositif de motorisation suivant l'une quelconque des revendications 1 à 8, **caractérisé en ce que** les moyens élastiques (30) sont disposés autour d'une partie angulaire déterminée de la circonférence extérieure des cylindres d'enroulement (1a, 1b).

11. Système déployant pour satellite artificiel, comprenant au moins un premier appendice déployable et un second appendice déployable, **caractérisé en ce qu'il** comprend en outre un dispositif de motorisation selon l'une quelconque des revendications précédentes, les appendices déployables étant fixés sur chaque ensemble formé par un cylindre d'enroulement (1a, 1b) et une piste flexible (2a, 2b).
